# EUROPÄISCHE PATENTANMELDUNG

(11) **EP 4 611 175 A1**
(43) Veröffentlichungstag der Anmeldung: **03.09.2025**
(21) Anmeldenummer: 24161015.3
(22) Anmeldetag: 01.03.2024
(51) Int. Cl.: H01R 4/2433, H01R 9/03, H02G 3/22, H01R 24/78, H01R 12/67, H02G 3/08, H01R 13/74, H01R 13/514

(54) **STECKDOSENANSCHLUSSSYSTEM**

(71) Anmelder: Woertz AG, 4132 Muttenz (CH)
(72) Erfinder: Onodi, Tamas, 4132 Muttenz (CH); Tschudin, Beat, 4132 Muttenz (CH); Castronari, Luca, 4132 Muttenz (CH)
(74) Vertreter: Samson & Partner Patentanwälte mbB

(57) **Zusammenfassung**

Anschlusssystem für eine Steckdose, wobei das Anschlusssystem eine Anschlussdose zum elektrischen Anschließen der Steckdose an ein Flachkabel als Durchgangsleitung umfasst und wobei die Steckdose direkt auf die die Anschlussdose aufsetzbar ist. Die Anschlussdose umfasst mehrere Durchdringungskontaktelemente zur abisolierfreien Kontaktierung des Flachkabels, wobei die Anschlussdose Verbindungselemente umfasst, welche die Durchdringungskontaktelemente über die Verbindungselemente elektrisch mit Steckdosenkontakten verbinden. Die Steckdosenkontakte verbinden einen in die Steckdose eingesteckten Stecker elektrisch mit Adern des Flachkabels. Das Fachkabel ist in einen von der Steckdose getrennten Bereich der Anschlussdose einlegbar und die Durchdringungskontaktelemente kontaktieren die Adern des Flachkabels abisolierfrei bei Betätigen eines Klemmmechanismus.

## Beschreibung

### GEBIET DER ERFINDUNG

Die Erfindung betrifft ein Steckdosenanschlusssystem.

### HINTERGRUND DER ERFINDUNG

US 9,437,978 B2 stellt ein System zur Bereitstellung elektrischer Energie und zugehörige Komponenten bereit. Ein universelles Modul wird vorgestellt, das so angepasst ist, dass es in eine gängige im Hochbau gegebene Anschlussdose passt. Das mit einer Wohnung verbundene Kabel ist beispielsweise mit dem Modul verbunden, das eine Vielzahl von Orten für die Aufnahme elektrischer Anschlüsse einer Steckdose oder eines Schalters bereitstellt. Die Module nehmen schnell und sicher eine elektrische Komponente auf, wodurch der mit der Installation verbundene Zeitaufwand wird und die mit der Installation, einer Änderung oder Reparatur verbundenen Kosten reduziert werden.

### KURZFASSUNG DER ERFINDUNG

Ein erster Aspekt der Erfindung betrifft ein Anschlusssystem für eine Steckdose, wobei das Anschlusssystem eine Anschlussdose zum elektrischen Anschließen der Steckdose an ein Flachkabel als Durchgangsleitung umfasst und wobei die Steckdose direkt auf die die Anschlussdose aufsetzbar ist. Die Anschlussdose umfasst mehrere Durchdringungskontaktelemente zur abisolierfreien Kontaktierung des Flachkabels, wobei die Anschlussdose Verbindungselemente umfasst, welche die Durchdringungskontaktelemente elektrisch mit Steckdosenkontakten verbinden. Die Steckdosenkontakte verbinden einen in die Steckdose eingesteckten Stecker elektrisch über die Verbindungselemente mit Adern des Flachkabels. Das Fachkabel ist in einen von der Steckdose getrennten Bereich der Anschlussdose einlegbar und die Durchdringungskontaktelemente kontaktieren die Adern des Flachkabels abisolierfrei bei Betätigen eines Klemmmechanismus.

Ein zweiter Aspekt betrifft einen Installationssatz, der wenigstens eine durch ein Flachkabel gebildete Durchgangsleitung und wenigstens ein Anschlusssystem gemäß dem ersten Aspekt umfasst, um an Steckdosen mittels des Anschlusssystems an vordefinierten Stellen mit dem Flachkabel zu verbinden.

### ALLGEMEINE ERLÄUTERUNG, AUCH BETREFFEND FAKULTATIVE AUSGESTALTUNGEN DER ERFINDUNG

Der erste Aspekt betrifft ein Anschlusssystem für eine Steckdose. Das Anschlusssystem umfasst eine Anschlussdose zum elektrischen Anschließen der Steckdose an ein Flachkabel als Durchgangsleitung. Das Flachkabel ist dabei mehradrig ausgebildet - und umfasst beispielsweise ein bis drei Phasenleiteradern, eine Neutralleiterader und eine Schutzleiterader. Die Steckdose kann dabei eine mehrpolige Steckdose mit Neutralleiter und Schutzleiteranschluss sein.

Die Steckdose ist direkt auf die die Anschlussdose aufsetzbar. Letztlich soll über die auf die Anschlussdose aufgesetzte Steckdose - ggf. auch über einen Steckdosenadapter - eine elektrische Verbindung zwischen einem in die Steckdose eingesteckten Stecker und dem Flachkabel hergestellt werden.

Die Anschlussdose umfasst dabei mehrere Durchdringungskontaktelemente zur abisolierfreien Kontaktierung des Flachkabels. Die Durchdringungskontaktelemente durchdringen die Isolierung einer Flachkabelader und kontaktieren den zugehörigen Aderleiter. Die Durchdringungskontaktelemente können dabei als Kontaktmesser, (beidseitige) Kontaktschneiden, Dorne, Mehrfachdorne etc. ausgestaltet sein.

Es kann dabei ein Durchdringungskontaktelement pro Flachkabelader vorgesehen sein, also beispielsweise bei einem dreiadrigen Flachkabel je ein Durchdringungskontaktelement je Flachkabelader, also insgesamt drei Durchdringungskontaktelement, z.B. drei Kontaktmesser oder drei Kontaktdornen. Ebenso können für je eine Flachkabelader mehrere Durchdringungskontaktelement (z.B. zwei oder drei Kontaktmesser/Dornen pro Flachkabelader) zu dessen abisolierfreier Kontaktierung vorgesehen sein. Insbesondere bei relativ hohen Stromstärken und entsprechend hohem Leiterquerschnitt kann sich die Verwendung von mehreren Durchdringungskontaktelementen pro Flachkabelader als vorteilhaft erweisen.

Die auf die Anschlussdose aufgesetzte Steckdose wird also durch Piercing Kontaktierung auf das Flachkabel montiert und dabei gleichzeitig kontaktiert, ohne dass dazu die Isolationsschicht eines Kabels entfernt werden müsste. Somit ist die aufgesetzte Steckdose nach der Montage sofort einsatzbereit. Die Installation kann so sogar innerhalb einer Minute bzw. jedenfalls innerhalb von wenigen Minuten erfolgen. Montagefehler sind durch die gleichzeitige Kontaktierung aller gewünschten Flachkabeladern nahezu ausgeschlossen. Details zur Montage folgen unterhalb.

Die Anschlussdose umfasst Verbindungselemente, welche die Durchdringungskontaktelemente elektrisch mit Steckdosenkontakten verbinden. Diese Verbindungselemente sind typischerweise aus Metall gefertigt. Die Durchdringungskontaktelemente können sich beispielsweise einstückig an die Verbindungselemente anschließen. Ebenso können die Durchdringungskontaktelemente, etwa Kontaktmesser, Dornen oder dergleichen, auf die Verbindungselemente aufgesteckt sein.

In der Anschlussdose können mehrere Verbindungselemente vorgesehen sein, wobei die Verbindungselemente je wenigstens ein Durchdringungskontaktelement mit einem Anschluss für einen Steckdosenkontakt der Steckdose aufweisen. Es kann ebenso das Durchdringungskontaktelement, z.B. Kontaktmesser, Dorn etc., zu einem separaten Anschluss für den Steckdosenkontakt verbunden sein.

Die Steckdosenkontakte verbinden einen in die Steckdose eingesteckten Stecker elektrisch mit Adern des Flachkabels. Wie oben erwähnt, wird diese Verbindung über die Verbindungselemente und die damit (ggf. einstückig) verbundenen Durchdringungskontaktelement hergestellt.

Dabei wird beispielsweise wenigstens ein Phasen-Steckdosenkontakt zu wenigstens einer Phasenleiterader des Flachkabels, ein Neutralleiter-Steckdosenkontakt zu einer Neutralleiterader des Flachkabels und ein Schutzleiterkontakt der Steckdose zu einer Schutzleiterader des Flachkabels verbunden. Sofern mehrere Phasenleiteradern des Flachkabels und mehrere Phasenleiter-Steckdosenkontakte vorgesehen sind, kann auch jede Phasenleiterader des Flachkabels mit je einem Phasenleiter-Steckdosenkontakt einer mehrphasigen Steckdose verbunden sein. Ebenso kann das Flachkabel zwar mehrere Phasenleiteradern aufweisen, jedoch nur eine ausgewählte dieser Phasenleiteradern zu einem Phasenleiter-Steckdosenkontakt einer einphasigen Steckdose verbunden sein.

Die Verbindungselemente sind beispielsweise als in die Anschlussdose eingesetzte Stanz-Biegeteile ausgestaltet, ggf. mit damit einstückig (bzw. integral) geformten Steckdosenanschlüssen. Diese Stanz-Biegeteile können aus plattenförmigen Blechwerkstoffen gestanzt und gebogen werden. Der Querschnitt der Verbindungselemente (hier: Stanzbiegeteile) wird beispielsweise so gewählt, dass die für die jeweilige Verbindung zu erwartenden Stromstärken von dem Stanz-Biegeteil toleriert werden. An das Stanzbiegeteil kann sich wenigstens ein Durchdringungskontaktelement einstückig anschließen.

Beispielsweise greifen ein oder mehrere Steckkontakte eines in die Steckdose eingesetzten Steckers zu einem Anschluss eines für diesen Steckkontakt vorgesehenen Verbindungselements durch. Das z.B. als Stanz-Biegeteil ausgestaltete Verbindungselement kann an einem Ende ein Durchdringungskontaktelement aufweisen und an einem anderen Ende eine Hülse für den Steckdosenkontakt bzw. für den Steckkontakt des in die Steckdose eingesetzten Steckers.

So kann beispielsweise der Steckkontakt eines in die Steckdose eingesetzten Steckers in einer mit dem Verbindungselement einstückig verbundenen Hülse enden, während das Durchdringungskontaktelement (z.B. Kontaktmesser, Dorn etc.) am anderen Ende des Verbindungselements eine Flachkabelader kontaktiert. Es kann je ein Steckkontakt eines Steckers bzw. alle Steckkontakte eines Steckers jeweils in der Hülse eines zugeordneten Verbindungselements aufgenommen werden, während das andere Ende des jeweiligen Verbindungselements mittels des sich anschließenden Durchdringungskontaktelements eine jeweils zugeordnete Ader des Flachkabels kontaktiert.

Die Verbindungselemente können als austauschbare Verbindungselemente ausgeführt sein, wobei ein bestimmter Satz von Verbindungselementen zur elektrischen Verbindung der Adern des Flachkabels mit einer Steckdose eines bestimmten Typs mit bestimmten Steckdosenkontakten dient.

Der Durchgriff der Steckerkontakte eines in die Steckdose eingesetzten Steckers kann beispielsweise für Steckdosentype der Schweizer, der französischen oder der UK-Norm erfolgen (Schweiz: Stecker bzw. Steckdosentyp C, J; Frankreich: Stecker bzw. Steckdosentyp: C, E; UK-Stecker bzw. Steckdosentyp: G).

Um die Verbindung der Steckdosenkontakte mit den Flachkabeladern zu bewerkstelligen, ist das das Fachkabel in einen von der Steckdose getrennten Bereich der Anschlussdose einlegbar. Das Flachkabel ist als Durchgangsleitung also durch die Anschlussdose durchgeführt.

Bei Betätigen eines Klemmmechanismus kontaktieren Durchdringungskontaktelemente (z.B. die Kontaktmesser) die Adern des Flachkabels abisolierfrei.

Das so beschriebene Anschlusssystem ermöglicht es, auch mit wenigen Elektroinstallateuren bzw. Fachkräften Steckdosen installieren zu können. Wenn die Orte der Steckdosen bekannt sind, können die Längen einer Durchgangsleitung (gegeben durch das Flachkabel) für einen gesamten Raum vorkonfektioniert werden. Die einzelnen Adern des Fachkabels werden beispielsweise mit Farben gekennzeichnet, ebenso die Anschlüsse der Steckdose, um eine einfache Bedienung zu ermöglichen. Auch der Sitz der Steckdose auf der Anschlussdose kann so ausgestaltet sein, dass die Steckdose nur auf eine bestimmte Art aufgesetzt werden kann, sodass die Steckdosenkontakte die dafür vorgesehenen Verbindungselemente kontaktieren.

Das beschriebene Anschlusssystem für Steckdosen ist somit für Fertig(teil)häuser, sowie insbesondere Holzhäuser geeignet.

Bei einem Fertig(teil)haus kann beispielsweise das Flachkabel rund 30 cm von der Nulllinie verlegt werden. Die Steckdosen können dann gesetzt werden ohne, dass vorher Kabel verlegt wird, indem die hier beschriebenen Anschlusssysteme an gewünschten Steckdosenstandorten angebracht werden. Das Flachkabel kann dann in die bereits zuvor gesetzte Anschlussdose der Anschlussvorrichtung an dem gewünschten Steckdosenstandardort eingelegt werden.

Die elektrische Verbindung zwischen der Steckdose und der Anschlussdose wird dann durch Betätigen des Klemmmechanismus an der Anschlussdose hergestellt. Diese Verbindung kann lösbar ausgestaltet sein, indem beispielsweise nach durch Lösen des Klemmmechanismus das Flachkabel wieder aus der Anschlussdose herausgenommen werden kann.

In einem Holzhaus können Kabelkanäle, in denen beispielsweise jeweils ein Flachkabel eingelegt ist, direkt in die Wände verlegt werden und bereits beim Bau des Holzhauses integriert werden. Das Flachkabel kann dabei an dem gewünschten Steckdosenstandort mit einem Haken aus dem Kabelkanal herausgeholt werden, um es in die Anschlussdose einzusetzen.

In manchen Ausführungsformen ist in der Anschlussdose ein Isolierkörper zwischen der aufgesetzten Steckdose und dem Flachkabel vorgesehen.

Fakultativ können an der der Steckdose zugewandten Seite des Isolierkörpers mehrere Anschlüsse für Steckdosenkontakte vorgesehen sein, wobei die Anschlüsse für die Steckdosenkontakte so an der der Steckdose zugewandten Seite des Isolierkörpers angeordnet sind, dass die Anschlüsse die Steckdosenkontakte einer auf die Anschlussdose aufgesetzten Steckdose eines bestimmten Typs kontaktieren.

Der Isolierkörper ist zwischen einer Aufnahme für das Flachkabel und der auf die Anschlussdose aufgesetzten Steckdose angeordnet. Die Verbindungselemente verbinden beispielsweise die Anschlusstücke für die Durchdringungskontaktelemente und die Anschlussstücke für die aufgesetzte Steckdose miteinander. Dabei können die Verbindungselemente auch einstückig mit den Anschlussstücken gefertigt sein - es kann ein Verbindungselement beispielsweise auf der einen Seite in ein Durchdringungskontaktelement (z.B. Kontaktmesser, Dorn etc.) übergehen und auf der anderen Seite in ein Anschlussstück für die Steckdosenkontakte.

Es werden beispielsweise mehrere Verbindungselemente vom Isolierkörper beabstandet zueinander und isoliert voneinander gehalten. Die Anschlussstücke für die Durchdringungskontaktelemente bzw. für die Steckdosenkontakte können auch fest an dem Isolierkörper vorgesehen sein, wobei je ein bestimmtes Anschlussstück für einen Steckdosenkontakt zu einem bestimmten Anschlussstück für ein Durchdringungskontaktelement über elektrische Verbindungskanäle innerhalb des Isolierkörpers verbunden sein kann. Die jeweiligen Verbindungskanäle zwischen einem bestimmten Anschluss für den Steckdosenkontakt und einem bestimmten Durchdringungskontaktelement bilden dabei die jeweiligen Verbindungselemente.

Es können mehrere Sätze von Anschlüssen für Steckdosenkontakte von Steckdosen eines bestimmten Typs vorgesehen sein, wobei jeweils ein bestimmter Satz von Anschlüssen einem bestimmten Steckdosentyp zugeordnet ist, wodurch verschiedene Steckdosentypen mittels der Anschlussdose elektrisch mit dem Flachkabel verbindbar sind.

Die Anschlüsse für die Steckdosenkontakte können dabei den Anschlusstücken des oben genannten Isolierkörpers entsprechen. Der Isolierkörper kann so also als Zwischenstück zwischen dem Flachkabel und Steckdosen verschiedener Typen dienen. An dieses Zwischenstück sind beispielsweise verschiedene Steckerformen (Steckertypen) anschließbar - einschließlich verschiedener Erdungssysteme bzw. Schutzleitersysteme.

Die Kompatibilität der Anschlüsse der Steckdosenkontakte kann dabei z.B. der UK-Norm (Stecker, Steckdose Typ G), US-Norm Stecker Steckdose (Stecker, Steckdose Typ A, B), DE-Norm (Stecker, Steckdose Typ C, F "Schukosteckdose" bzw. Typ E, F), FR-Norm Steckdose (Stecker, Steckdose Typ C, E), oder Schweizer Norm (Stecker, Steckdose Typ C, J) entsprechen. Grundsätzlich können verschiedene Steckdosenkontakte z.B. auf dem Isolierkörper in solchen Abständen zueinander angeordnet sein, dass eine gleichzeitige Kompatibilität des Anschlusssystems mit verschiedenen Steckdosentypen gewährleistet ist. Die Kompatibilität kann sich dabei auf beliebige Steckdosentypen beziehen.

Die oben erwähnte Steckdose eines bestimmten Typs eine Steckdose ist dann entsprechend eine Steckdose nach Schweizer Norm, eine Steckdose nach deutscher Norm, insbesondere eine Schuko-Steckdose, eine Steckdose nach französischer Norm, nach UK-Norm oder nach US-Norm.

Wie oben erwähnt, sind in dem Zwischenstück (d.h. in dem Isolierkörper) elektrische Verbindungen nach Art einer Metallmatrix angeordnet. um bestimmte Anschlussstücke für bestimmte Steckdosenkontakte mit der jeweils zugeordneten Kabelader des Flachkabels zu verbinden. In manchen Ausführungsformen endet wenigstens ein Steckkontakt eines in die Steckdose eingesetzten Steckers an einem für diesen Steckkontakt vorgesehenen Anschluss am Isolierkörper.

Möglich ist es auch eine Ausgestaltung, bei der zwecks Verwendbarkeit mit verschiedenen Steckdosentypen ein auf den jeweiligen Steckdosentyp angepasster Adapter vorgesehen ist, der zwischen der aufzusetzenden Steckdose und der eigentlichen Anschlussdose liegt und in die Anschlussdose eingesetzt wird.

Bei dieser Ausgestaltung ist der zum Beispiel ein Adapter zwischen verschiedenen Steckdosentypen, wie etwa ein Adapter zwischen einer Steckdose nach Schweizer Norm (Stecker, Steckdose Typ C, J) und einer Steckdose nach deutscher Norm (Stecker, Steckdose Typ C, F "Schukosteckdose" bzw. Typ E, F). Es können auch ohne Adapter Schweizer Steckkontakte (Stecker, Steckdose Typ C, J) können auf Anschlüsse, die für diesen Steckdosentyp vorgesehen sind, gelegt werden. Andererseits können auch Steckdosenkontakte nach DE Norm (Stecker, Steckdose Typ C, F "Schukosteckdose") eben über einen Adapter auf Anschlüsse für Schweizer Steckdosen (Stecker, Steckdose Typ C, J) gelegt werden. Die den aufgesetzten Steckdosen vorgelagerten Adapter ermöglichen es Steckdosen eines beliebigen Typs zu verwenden, selbst wenn die Anschlüsse innerhalb der Anschlussdose für einen anderen bestimmten Steckdosentyp vorgesehen sind.

Alternativ oder ergänzend kann die Steckdose selbst eine Multifunktionssteckdose sein, welche Steckkontakte für Stecker verschiedenen Typs bereitstellt.

Beispielsweise weist die Steckdose einen Neutralleiterkontakt und einen Phasenleiterkontakt nach Schweizer und deutscher Norm auf (diese Kontakte können typischerweise identisch sein), jedoch separat einen Schutzleiterkontakt nach Schweizer Norm und einen Schutzleiterkontakt nach DE Norm (Schukoanschluss).

Bei Varianten mit zusätzlichem fakultativem Datenanschluss weist das Flachkabel wenigstens einen Phasenleiter, einen Neutralleiter, einen Schutzleiter und vorzugsweise wenigstens einen Datenleiter als Kabelader auf. Anschlussdose hat entsprechende Anschlüsse, mit der die aufgesetzte Steckdose über die Anschlussdose mit dem jeweils zugehörigen Kabelader verbunden werden. In einer solchen Ausgestaltung können ebenso Datenkabel abisolierfrei angezapft werden - diese Datenkabel können über das hier beschriebene Anschlusssystem beispielsweise direkt zu einem Jalousien-Motor oder zu einer Steckdose mit einem Datenkontakt verbunden werden. Es kann sich dabei um Datenschnittstellen vom KNX-Typ handeln.

Die Anschlussdose kann ein Hebelelement als Klemmelement umfassen, wobei bei Betätigung des Hebelelements die Durchdringungskontaktelement in das Flachkabel gepresst werden, um das Flachkabel abisolierfrei zu kontaktieren. Das Hebelelement dabei an Hebelgelenken an den Außenseiten der Anschlussdose angebracht sein und dazu vorgesehen sein, um z.B. aus dem Isolierkörper herausragende Durchdringungskontaktelemente mitsamt dem Isolierkörper in Richtung des in die Anschlussdose eingelegten Flachkabels zu pressen. Die Verankerung der Hebelgelenke kann dabei insbesondere an den Außenseiten des Isolierkörpers bzw. des Isolierkörperteils (siehe unten) vorgesehen sein. Dabei durchdringen die Durchdringungskontaktelemente schließlich die Isolierung des Flachkabels und kontaktieren die zugehörigen Adern des Flachkabels.

Die Anschlussdose kann mehrteilig aufgebaut sein. Ein erster Teil der Anschlussdose, durch den das Flachkabel durchgeführt wird, weist z.B. Verankerungselemente auf, um den ersten Teil der Anschlussdose (Auflageteil) in einer Wandöffnung zu verankern. Ein zweiter Teil der Anschlussdose (Isolierkörperteil) umfasst die Durchdringungskontaktelemente und den Klemmmechanismus und ist auf den ersten Teil der Anschlussdose aufsetzbar.

Der erste Teil der Anschlussdose, hier auch als Auflageteil bezeichnet, kann dabei beispielsweise über Schrauben an einer Wandöffnung verankert werden und kann über ein Steckkontaktsystem mit dem zweiten Teil der Anschlussdose, hier auch als Isolierkörperteil bezeichnet, vereinigt werden. Der Klemmmechanismus bzw. das Klemmelement ist beispielsweise als ein Hebel am Isolierkörperteil der Anschlussdose ausgestaltet und presst den Isolierkörperteil der Anschlussdose mit den Durchdringungskontaktelementen in Richtung des Auflageteils der Anschlussdose in den das Flachkabel eingelegt ist, um das Flachkabel mittels der Durchdringungskontaktelemente abisolierfrei zu kontaktieren.

Ein weiterer Aspekt betrifft eine Steckdoseninstallation, umfassend ein Flachkabel, wenigstens ein mit dem Flachkabel abisolierfrei verbundenes Anschlusssystem gemäß dem oben beschriebenen ersten Aspekt, und eine auf das wenigstens eine Anschlusssystem aufgesetzte Steckdose.

Ein noch weiterer Aspekt betrifft einen Installationssatz, wobei der wenigstens eine durch ein Flachkabel gebildete Durchgangsleitung und wenigstens ein Anschlusssystem gemäß dem oben beschriebenen ersten Aspekt umfasst, um an Steckdosen mittels des Anschlusssystems an vordefinierten Stellen mit dem Flachkabel zu verbinden.

### KURZE BESCHREIBUNG DER ZEICHNUNG

Die Zeichnung dient der Veranschaulichung des oben beschriebenen Steckdosenanschlusssystems, der oben beschriebenen Steckdoseninstallation und dem oben beschriebenen Installationssatz durch Ausführungsbeispiele. In der Zeichnung zeigen:
- Fig. 1 schematisch eine geschlitzte Wand mit einem in der Wand verlaufenden Kabelkanal, der durch eine Wandöffnung zugänglich ist,
- Fig. 2 schematisch eine auf die in Fig. 1 gezeigte Wandöffnung aufgesetzte Steckdose, die mit einem durch den Kabelkanal geführtes Flachkabel verbunden ist,
- Fig. 3 schematisch eine Steckdose, die durch das hier beschriebene Anschlusssystem mit einem Flachkabel verbunden werden kann,
- Fig. 4 schematisch die Steckdose aus Fig. 3 über einem Flachkabel,
- Fig. 5 schematisch eine auf eine zweiteilig aufgebaute Anschlussdose aufgesetzte Steckdose über einem Flachkabel, wobei die Anschlussdose eine beidseitige Wandverankerung aufweist,
- Fig. 6 schematisch die Anschlussdose in einer Draufsicht mit Anschlüssen für die auf die Anschlussdose aufgesetzte Steckdose und Verbindungselementen zum Flachkabel, die in diesen Anschlüssen enden - das Flachkabel ist dabei durch die mehrteilige Anschlussdose geführt,
- Fig. 7 schematisch die Anschlussdose in einer Draufsicht, wobei die Anschlussdose über Verankerungselemente in der Wandöffnung montiert ist,
- Fig. 8 schematisch den Auflageteil der Anschlussdose, über welchen die gesamte Anschlussdose in der Wandöffnung verankert ist, mitsamt einem Flachkabel, welches durch den Auflageteil der Anschlussdose geführt ist und auf einer Auflagefläche des Auflageteils der Anschlussdose aufliegt,
- Fig. 9 schematisch einen Auflageteil der Anschlussdose mit einseitiger Wandverankerung,
- Fig. 10 schematisch den Auflageteil der Anschlussdose aus Fig. 9 mit einem darauf aufgesetzten Haken als Montagehilfe, wobei der Auflageteil der Anschlussdose mit darin eingesetzten Schrauben an der Wand verankert ist,
- Fig. 11 schematisch den Auflageteil der Anschlussdose aus Fig. 10, wobei die Wandverankerung gelöst ist, um die Position der Anschlussdose relativ zur Wand zu verändern,
- Fig. 12 schematisch den Auflageteil der Anschlussdose aus Fig. 11 mit darin eingelegtem Flachkabel,
- Fig. 13 schematisch eine komplettes Anschlusssystem mit einer auf die Anschlussdose aufgesetzten Steckdose und einem durch die Anschlussdose geführten Flachkabel,
- Fig. 14 schematisch eine Anschlussdose mit Hebelelement und zweiteiligem Isolierkörper und aus diesem herausragenden Durchdringungskontaktelemente, die über das Hebelelement in das durch die Anschlussdose geführte Flachkabel gepresst werden können in Seitenansicht,
- Fig. 15 schematisch die Anschlussdose aus Fig. 14 in Draufsicht,
- Fig. 16 schematisch den zweiteiligen Isolierkörper mit Anschlüssen für die Steckdose und darauf montierten Hebelelement,
- Figs. 17 und 18 schematisch ein bzw. mehrere Anschlusssystem(e) mitsamt darauf aufgesetzten Steckdosen und das so kontaktierte Flachkabel,
- Fig. 19 eine Multifunktionssteckdose, welche als Steckdose sowohl nach DE Norm (Schuko) als auch nach Schweizer Bauart dient.

### BESCHREIBUNG VON AUSFÜHRUNGSBEISPIELEN ANHAND DER ZEICHNUNG

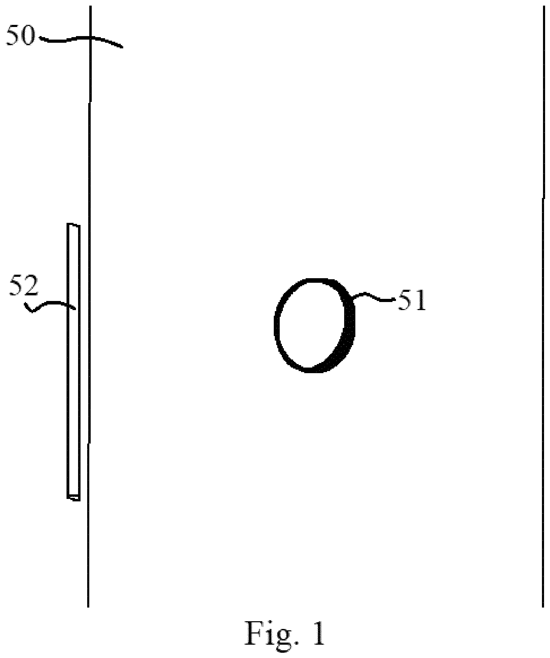

Eine schematische eine geschlitzte Wand 50 mit einem in der Wand 50 verlaufenden Kabelkanal 52, der durch eine Wandöffnung 51 zugänglich ist, ist schematisch in **Fig. 1** gezeigt.

Der Kabelkanal 52 verläuft hinter der Wand 50 und ist durch die Öffnung 51 zugänglich.

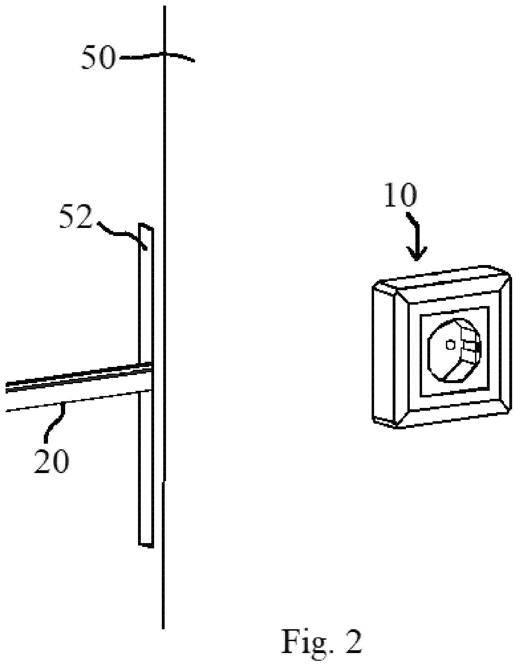

Eine auf die in Fig. 1 gezeigte Wandöffnung 51 aufgesetzte Steckdose 10, die mit einem durch den Kabelkanal 52 geführtes Flachkabel 20 verbunden ist, ist schematisch in **Fig. 2** dargestellt.

Das Flachkabel 20 verläuft entlang eines Kabelkanals quer durch die Wand 50 und ist an in Fig. 2 dargestellten Stelle zur Steckdose 10 verbunden.

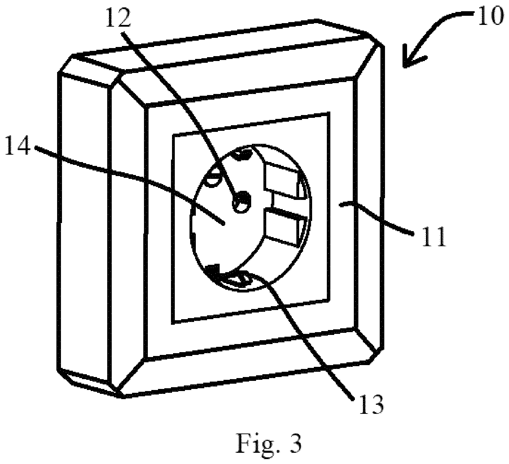

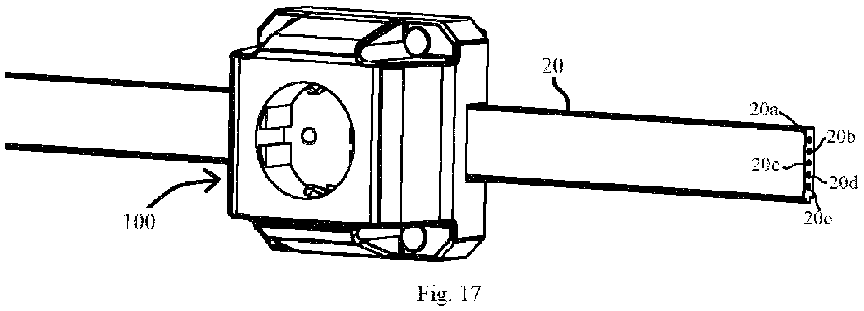

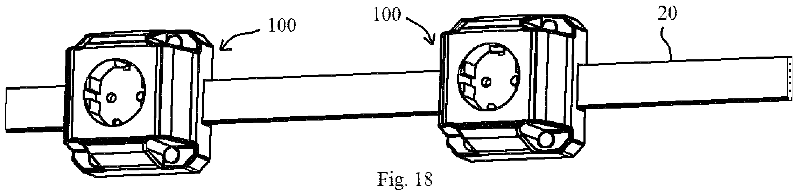

Ein Beispiel für eine Steckdose 10, die durch das hier beschriebene Anschlusssystem 100 (siehe Fig. 17 und Fig. 18) mit einem Flachkabel verbunden werden kann, ist schematisch in **Fig. 3** dargestellt.

Die Steckdose 10 weist eine Verkleidung 11 auf, sowie einen Neutral- bzw. Phasenleiterkontakt 12 sowie einen Schutzkontakt (PE-Kontakt) 13. Die Steckdose ist als eine in z.B. Deutschland handelsübliche Schuko-Steckdose dargestellt.

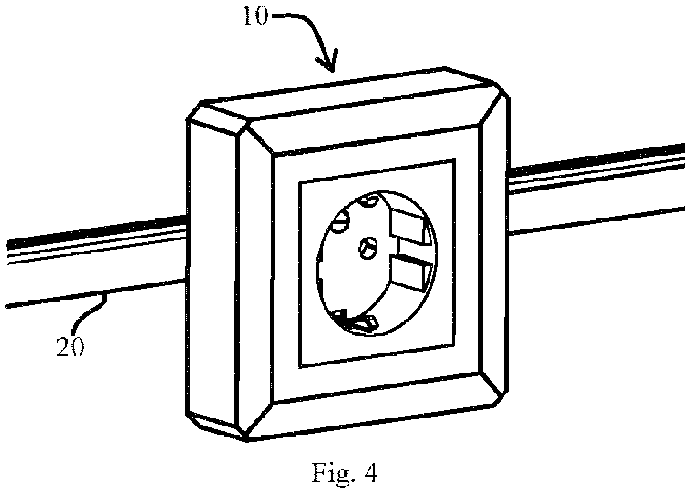

Die Steckdose 10 aus Fig. 3 ist in **Fig. 4** schematisch über einem Flachkabel 20 dargestellt.

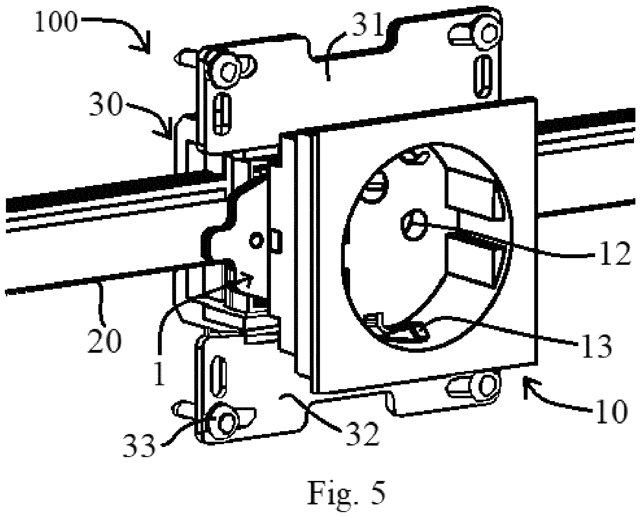

Ein Beispiel für eine auf eine zweiteilig aufgebaute Anschlussdose 1 aufgesetzte Steckdose 10 über einem Flachkabel 20, wobei die Anschlussdose 1 eine beidseitige Wandverankerung 31, 32 aufweist, ist schematisch in **Fig. 5** dargestellt.

Hier ist ein Auflageteil 30 der Anschlussdose 1 mit zwei seitlichen Wandverankerungen 31, 32 versehen, die eben über Schrauben 33 in einer Wand (siehe Figs. 1 und 2) verankert werden können. Das Flachkabel 20, die Anschlussdose 1 und die Steckdose 10 stellen beispielsweise das hier beschriebene Anschlusssystem 100 bereit.

Das Flachkabel 20 ist durch den Auflageteil 30 der Anschlussdose geführt und liegt in diesem auf einer Auflagefläche auf, die im verbauten Zustand typischerweise parallel zu der Wand und dem dahinter liegenden Kabelkanal verläuft (siehe Figs. 1 und 2).

Auf die Anschlussdose 1 ist die Steckdose 10 aufgesetzt, und zwar so, dass ihre Neutralleiter bzw. Phasenleiterkontakte 12, und die Schutzleiterkontakte 13 elektrisch zu den Adern des Flachkabels 20 (siehe Fig. 17) verbunden werden. So wird in dem Beispiel die Neutralleiterader des Flachkabels 20 zu dem Neutralleiteranschluss der Steckdose 10 und die Phasenleiterader des Flachkabels 20 zu dem Phasenleiter der Steckdose 10 verbunden, so wie die Schutzleiterader des Flachkabels 20 zu dem Schutzkontakt 13 der Steckdose. Eine Darstellung der Kabeladern des Flachkabels findet sich in Fig. 17.

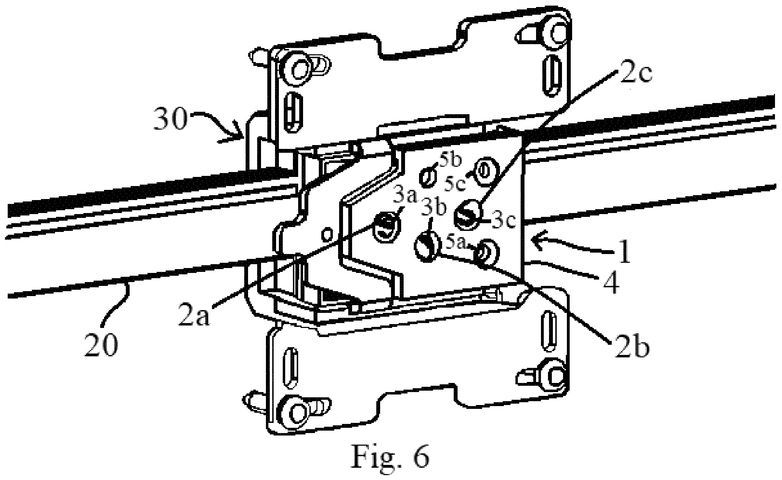

Die Anschlussdose 1 ist in **Fig. 6** in einer Draufsicht mit Anschlüssen für die auf die Anschlussdose aufgesetzte Steckdose 2a bis 2c bzw. 5a bis 5c und Verbindungselementen zum Flachkabel, die in diesen Anschlüssen enden - das Flachkabel 20 ist dabei durch die mehrteilige Anschlussdose geführt, dargestellt.

Wie zuvor ist das Flachkabel 20 durch einen Auflageteil 30 der Anschlussdose 1 geführt. Die Oberseite der Anschlussdose 1 weist eine isolierende Schablone 4 mit verschiedenen als Öffnungen ausgestaltete Anschlüssen 2a bis 2c sowie 5a bis 5c auf.

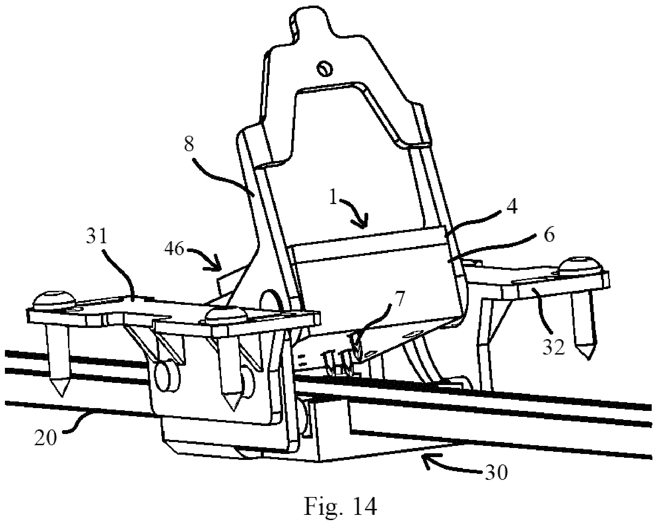

Die Anschlüsse 2a bis 2c an der Oberseite der Anschlussdose 1, welche in einer Schablone 4 geformt sind führen zu entsprechenden Verbindungselementen 3a bis 3c, welche an einem Ende in den Anschlüssen 2a bis 2c enden, am anderen Ende jedoch, beispielsweise einstückig, zu Durchdringungskontaktelemente 7 (z.B. Kontaktmessern, Dornen etc.) (siehe Fig. 14) verbunden sind. Die Anschlüsse 2a bis 2c sind hier beispielsweise für Steckdosen nach Schweizer Norm vorgesehen. Die Anschlüsse 5a bis 5c können so gewählt sein, dass auch andere Steckdosen, beispielsweise Steckdosen nach UK-Norm, US-Norm oder DE-Norm über die Anschlussdose 1 elektrisch mit dem Flachkabel 20 verbunden werden können.

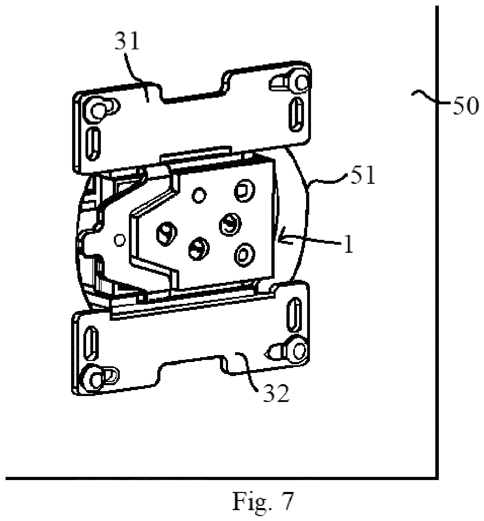

Die Anschlussdose 1 aus Fig. 6 ist in **Fig. 7** schematisch in einer Draufsicht dargestellt, wobei die Anschlussdose 1 über ihre Verankerungselemente 31, 32 in der Wandöffnung 51 and der Wand 50 montiert ist.

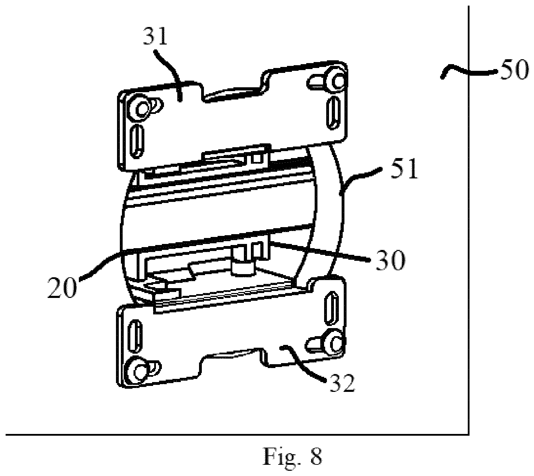

Der Auflageteil 30 der Anschlussdose, über welchen die gesamte Anschlussdose in der Wandöffnung verankert ist, mitsamt einem Flachkabel 20 welches durch den Auflageteil 30 der Anschlussdose geführt ist und auf einer Auflagefläche des Auflageteil 30 der Anschlussdose aufliegt, schematisch in **Fig. 8** gezeigt. Dabei ist der Auflageteil 30 beidseitig durch Verankerungselemente 31, 32 über Schrauben am Rand der Wandöffnung 51 verankert.

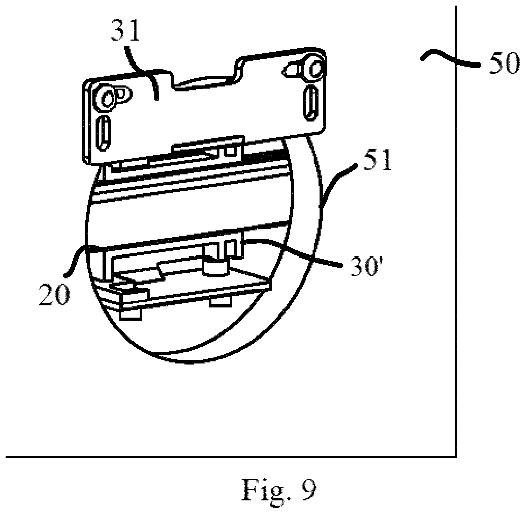

Eine Ausführungsform des Auflageteils 30' der Anschlussdose mit einseitiger Wandverankerung 31, ist schematisch in **Fig. 9** gezeigt. Der Auflageteil 30' der Anschlussdose kann mit dem in Fig. 8 gezeigten Auflageteil 30 der Anschlussdose identisch sein, bis auf das Fehlen einer Wandverankerung 32 auf der gegenüberliegenden Seite der Wandverankerung 31. Die beiden Wandverankerungen 31, 32 (siehe Fig. 8) können abnehmbar ausgestaltet sein, sodass zumindest eine der beiden Wandverankerungen 31, 32 (siehe Fig. 8) abgenommen werden kann, um das Flachkabel 20 aus der Wandöffnung 51 zu holen bzw. in die Wandöffnung einzusetzen.

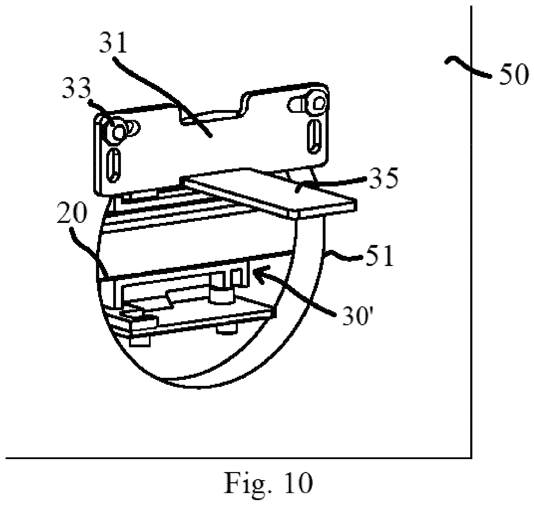

Der Auflageteil 30' der Anschlussdose aus Fig. 9 mit einem darauf aufgesetzten Haken 35 als Montagehilfe, wobei der Auflageteil 30' der Anschlussdose mit darin eingesetzten Schrauben an der Wand verankert ist, ist schematisch in **Fig. 10** dargestellt. Der Haken 35 kann dazu verwendet werden, das Flachkabel entweder mitsamt des Auflageteil 30' der Anschlussdose in die Wandöffnung 51 einzusetzen oder aus der Wandöffnung 51 zu holen.

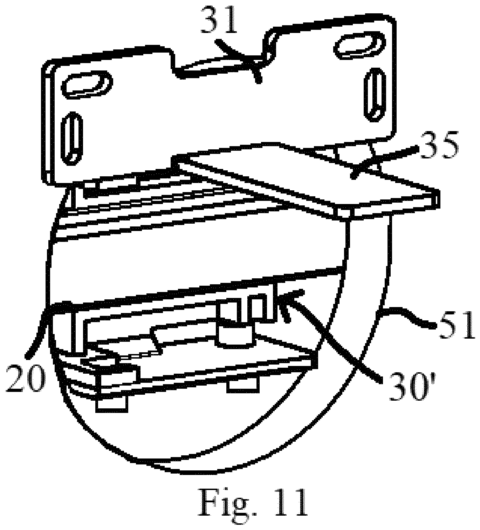

Ein solcher Zustand ist schematisch in **Fig. 11** gezeigt, wo die Wandverankerung 31 des Auflageteils 30' der Anschlussdose gelöst ist (in Fig. 11 sind die in Fig. 10 sichtbaren Schrauben entfernt), um die Position der Anschlussdose relativ zur Wand zu verändern.

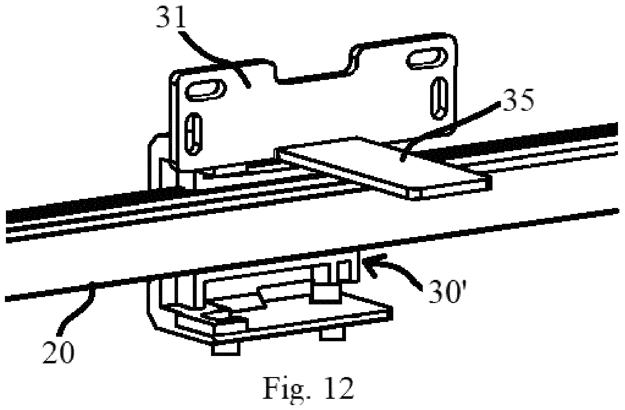

Der Auflageteil 30' der Anschlussdose aus Fig. 11 mit dem darin eingelegtem Flachkabel 20 ist in **Fig. 12** schematisch dargestellt. Die Darstellung in **Fig. 12** zeigt das in den Auflageteil 30' der Anschlussdose eingelegte Flachkabel 20 außerhalb einer Wandöffnung 51.

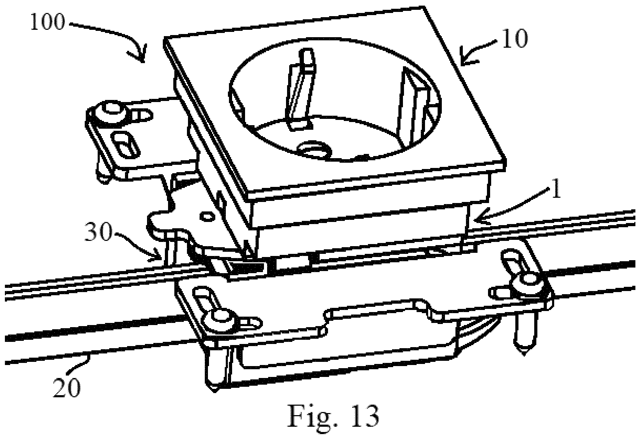

Ein komplettes Anschlusssystem 100 mit einer auf die Anschlussdose 1 aufgesetzten Steckdose 10 und einem durch die Anschlussdose 1 geführten Flachkabel 20 ist in **Fig. 13** dargestellt. Dabei ist das Flachkabel 20 durch den Auflageteil 30 der Anschlussdose 1 geführt.

Eine Anschlussdose 1 mit Hebelelement 8 und zweiteiligem Isolierkörper 46 und aus diesem herausragenden Durchdringungskontaktelemente 7, die über das Hebelelement 8 in das durch die Anschlussdose 1 geführte Flachkabel 20 gepresst werden können ist in **Fig. 14** in Seitenansicht dargestellt.

Das Flachkabel 20 liegt auf einer Auflagefläche des Auflageteils 30 der Anschlussdose 1 auf. Durchdringungskontaktelemente 7 ragen aus einem ersten Teil 6 des Isolierkörpers 46 in Richtung des Flachkabels 20 heraus. Die Durchdringungskontaktelemente 7 schließen sich beispielsweise an Verbindungselemente 3a bis 3c (siehe Fig. 6) einstückig an, oder sind zu diesen modular verbunden.

Die Verbindungselemente 3a bis 3c (siehe Fig. 6) erstrecken sich, beispielsweise für jedes der Durchdringungskontaktelemente 7 getrennt voneinander innerhalb des ersten Teil 6 (Träger für die Durchdringungskontaktelemente) des Isolierkörpers 46 bis zu der Schablone 4 mit den Anschlüssen (siehe Fig. 6). Die Schablone 4 und der erste Teil 6 (Träger für die Durchdringungskontaktelemente) bilden zusammen einen Isolierkörper 46 in dem die Verbindungselemente 3a bis 3c elektrisch getrennt voneinander verlaufen.

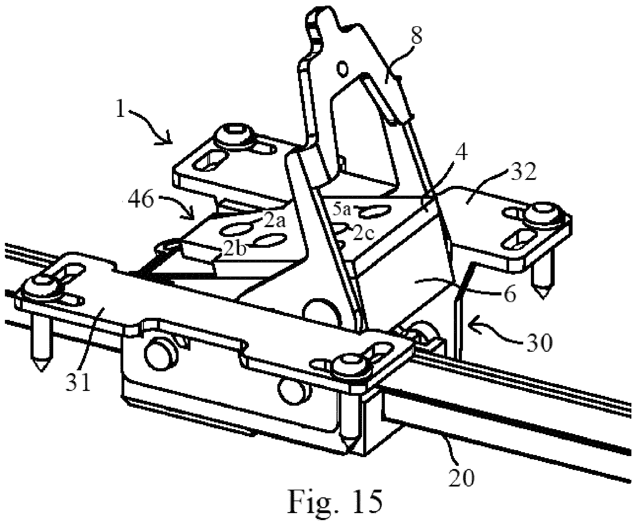

Ein Hebelelement 8 ist beidseitig an dem Isolierkörper 46 montiert. Das Hebelelement 8 dient als Klemmelement um bei Aktivierung den Isolierkörper 46 mit den Durchdringungskontaktelementen 7 in Richtung des Flachkabels 20, also in Richtung des Auflageteils 30 der Anschlussdose 1 zu pressen um die Adern des Flachkabels 20 abisolierfrei zu kontaktieren und so die Flachkabeladern über die Verbindungselemente 3a bis 3c zu den in Fig. 6 und Fig. 15 gezeigten Anschlüssen für die Steckdose 10 (siehe z.B. Fig. 13) zu legen, auf die dann die Steckdose 10 aufgesetzt ist.

Die Anschlussdose aus Fig. 14 ist in **Fig. 15** ist in Draufsicht dargestellt. In dieser Draufsicht sind die Anschlüsse 2a bis 2c bzw. 5a etc. auf der Schablone 4 als zweiten Teil des zweiteiligen Isolierkörpers 46 dargestellt.

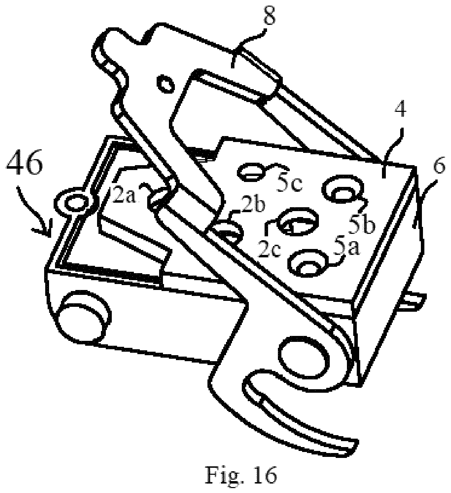

Der mehrteilige Isolierkörper 46 mit Anschlüssen 2a bis 2c bzw. 5a bis 5c für die Steckdose (beispielsweise Anschlüsse 3a bis 3c für Steckdosen nach Schweizer Norm) auf der Schablone 4 und darauf montierten Hebelelement 8 ist separat nochmals in **Fig. 16** dargestellt.

Die Anschlüsse 2a bis 2c sind hier beispielsweise für Steckdosen nach Schweizer Norm vorgesehen. Die Anschlüsse 5a bis 5c können so gewählt sein, dass auch andere Steckdosen, beispielsweise Steckdosen nach UK-Norm, US-Norm oder DE-Norm über die Anschlussdose 1 elektrisch mit dem Flachkabel 20 verbunden werden können.

Ein bzw. mehrere Anschlusssystem(e) 100 mitsamt darauf aufgesetzten Steckdosen und das so kontaktierte Flachkabel 20 sind in Fig. **17** und Fig. **18** dargestellt.

Das Flachkabel 20 weist dabei fünf Kabeladern 20a, 20b, 20c, 20d, 20e auf. Die Kabeladern 2a-2c sind dabei beispielsweise Phasenleiter, während die Kabelader 20d beispielsweise ein Neutralleiter und die Kabelader 20e beispielsweise ein Schutzleiter ist.

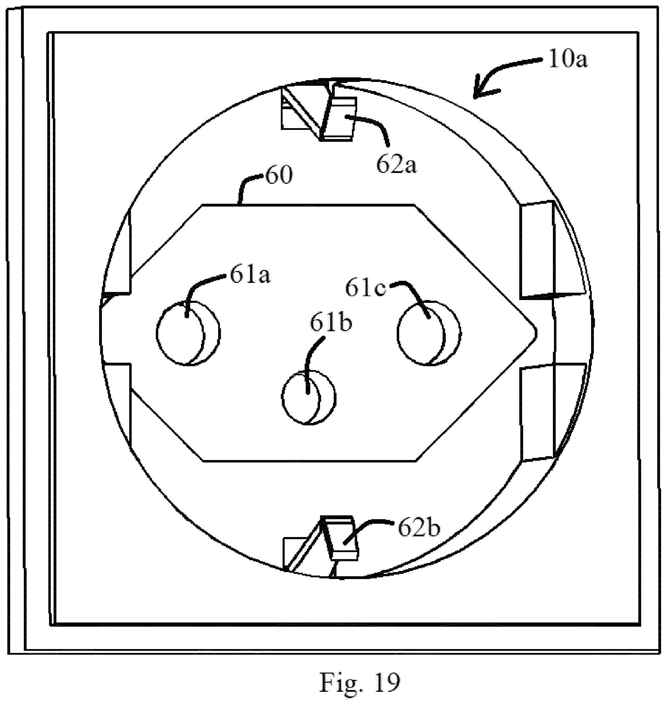

Eine Multifunktionssteckdose 10a, welche als Steckdose sowohl nach DE-Norm (Schuko) als auch nach Schweizer Bauart dient ist in **Fig. 19** dargestellt.

Die Multifunktionssteckdose 10a weist dabei einen Adapter 60 auf, der sowohl mit der DE-Norm als auch mit der Schweizer Norm kompatibel ist. Die Steckdosenöffnungen 61a, 16b, 61c, sowie die Schutzleiterkontakte 62a, 62b sind mit Steckern gemäß der Schweizer Norm als auch mit Steckern gemäß der DE-Norm kompatibel. Der Schweitzer Stecker kontaktiert die Öffnungen 61a, 61b, 61c, der DE-Stecker kontaktiert die Öffnungen 61a, 61c, sowie die Schutzkontakte 62a, 62b.

## Patentansprüche

1. Anschlusssystem für eine Steckdose,
wobei das Anschlusssystem eine Anschlussdose zum elektrischen Anschließen der Steckdose an ein Flachkabel als Durchgangsleitung umfasst,
wobei die Steckdose direkt auf die die Anschlussdose aufsetzbar ist,
wobei die Anschlussdose mehrere Durchdringungskontaktelemente zur abisolierfreien Kontaktierung des Flachkabels umfasst,
wobei die Anschlussdose Verbindungselemente umfasst, welche die Durchdringungskontaktelemente elektrisch mit Steckdosenkontakten verbinden,
wobei die Steckdosenkontakte einen in die Steckdose eingesteckten Stecker über die Verbindungselemente elektrisch mit Adern des Flachkabels verbinden,
wobei das Fachkabel in einen von der Steckdose getrennten Bereich der Anschlussdose einlegbar ist und bei Betätigen eines Klemmmechanismus die Durchdringungskontaktelemente die Adern des Flachkabels abisolierfrei kontaktieren.

2. Anschlusssystem nach Anspruch 1, wobei mehrere Verbindungselemente in der Anschlussdose vorgesehen sind, wobei die Verbindungselemente je wenigstens ein Durchdringungskontaktelement mit einem Anschluss für einen Steckdosenkontakt der Steckdose aufweisen.

3. Anschlusssystem nach Anspruch 2, wobei wenigstens ein Steckkontakt eines in die Steckdose eingesetzten Steckers zu einem Anschluss eines für diesen Steckkontakt vorgesehenen Verbindungselements durchgreift.

4. Anschlusssystem nach einem der Ansprüche 1 bis 3, wobei austauschbare Verbindungselemente vorgesehen sind, wobei ein bestimmter Satz von Verbindungselementen zur elektrischen Verbindung der Adern des Flachkabels mit einer Steckdose eines bestimmten Typs mit bestimmten Steckdosenkontakten dient.

5. Anschlusssystem nach Anspruch 1, wobei ein Isolierkörper zwischen der aufgesetzten Steckdose und dem Flachkabel vorgesehen ist.

6. Anschlusssystem nach Anspruch 5, wobei an dem der Steckdose zugewandten Seite des Isolierkörpers mehrere Anschlüsse für Steckdosenkontakte vorgesehen sind, wobei die Anschlüsse für die Steckdosenkontakte so an der der Steckdose zugewandten Seite des Isolierkörpers angeordnet sind, dass die Anschlüsse die Steckdosenkontakte einer auf die Anschlussdose aufgesetzten Steckdose eines bestimmten Typs kontaktieren.

7. Anschlusssystem nach Anspruch 6, wobei mehrere Sätze von Anschlüssen für Steckdosenkontakte von Steckdosen eines bestimmten Typs vorgesehen sind, wobei jeweils ein bestimmter Satz von Anschlüssen einem bestimmten Steckdosentyp zugeordnet ist, wodurch verschiedene Steckdosentypen mittels der Anschlussdose elektrisch mit dem Flachkabel verbindbar sind.

8. Anschlusssystem nach einem der Ansprüche 5 bis 7, wobei wenigstens ein Steckkontakt eines in die Steckdose eingesetzten Steckers an einem für diesen Steckkontakt vorgesehenen Anschluss am Isolierkörper endet.

9. Anschlusssystem nach einem der Ansprüche 5 bis 8, wobei die Steckdose des bestimmten Typs eine Steckdose nach Schweizer Norm, eine Steckdose nach deutscher Norm, insbesondere eine Schuko-Steckdose, eine Steckdose nach französischer Norm, nach UK-Norm oder nach US-Norm ist.

10. Anschlusssystem nach einem der Ansprüche 1 bis 9, wobei ist die Steckdose eine Multifunktionssteckdose ist, welche Steckkontakte für Stecker verschiedenen Typs bereitstellt, insbesondere für Stecker nach Schweizer Norm und nach DE-Norm.

11. Anschlusssystem nach einem der Ansprüche 1 bis 10, wobei das Flachkabel wenigstens einen Phasenleiter, einen Neutralleiter, einen Schutzleiter und vorzugsweise wenigstens einen Datenleiter als Kabelader umfasst und entsprechende Anschlüsse der aufgesetzten Steckdose über die Anschlussdose mit dem jeweils zugehörigen Kabelader verbunden werden.

12. Anschlusssystem nach einem der Ansprüche 1 bis 11, wobei die Anschlussdose ein Hebelelement als Klemmelement umfasst, wobei bei Betätigung des Hebelelements die Durchdringungskontaktelemente in das Flachkabel gepresst werden, um das Flachkabel abisolierfrei zu kontaktieren.

13. Anschlusssystem nach einem der Ansprüche 1 bis 12 wobei die Anschlussdose mehrteilig aufgebaut ist und ein erster Teil der Anschlussdose, durch den das Flachkabel durchgeführt wird, Verankerungselemente aufweist, um den unteren Teil der Anschlussdose in einer Wandöffnung zu verankern, und wobei ein zweiter Teil der Anschlussdose, welcher den Isolierkörper umfasst, die Durchdringungskontaktelemente und den Klemmmechanismus umfasst und auf den ersten Teil der Anschlussdose aufsetzbar ist.

14. Anschlusssystem nach Anspruch 13, wobei das Hebelelement an den Außenseiten des zweiten Teils der Anschlussdose, welcher den Isolierkörper umfasst, montiert ist.

15. Steckdoseninstallation, umfassend:
ein Flachkabel,
wenigstens ein mit dem Flachkabel abisolierfrei verbundenes Anschlusssystem nach einem der Ansprüche 1 bis 14,
eine auf das wenigstens eine Anschlusssystem aufgesetzte Steckdose.

16. Installationssatz, wobei der Installationssatz folgendes umfasst:
wenigstens eine durch ein Flachkabel gebildete Durchgangsleitung wenigstens eine Steckdose,
wenigstens ein Anschlusssystem nach einem der Ansprüche 1 bis 14, um die Steckdosen mittels des Anschlusssystems an vordefinierten Stellen mit dem Flachkabel zu verbinden.
